# EUROPÄISCHE PATENTANMELDUNG

(11) **EP 1 691 564 A1**
(43) Veröffentlichungstag der Anmeldung: **16.08.2006**
(21) Anmeldenummer: 05003208.5
(22) Anmeldetag: 15.02.2005
(51) Int. Cl.: H04Q 7/22

(54) **Endgerät und Verfahren für den Empfang und die Ausgabe von selektiven Rundsendenachrichten**

(71) Anmelder: SIEMENS AKTIENGESELLSCHAFT, 80333 München (DE)
(72) Erfinder: Morper, Hans-Jochen, 85253 Erdweg (DE)

(57) **Zusammenfassung**

Die Erfindung betrifft ein Informations-Endgerät für den Empfang und die Ausgabe von Rundsendenachrichten, wobei diese Rundsendenachrichten mit Indikatoren versehen sind. Erfindungsgemäß sind einstellbare Filter für die Indikatoren zur Selektion der indizierten Nachrichten vorgesehen, wobei die Selektion hinsichtlich der Behandlung und / oder der Auswahl der Nachrichten erfolgt.

## Beschreibung

Die Erfindung betrifft ein Informations-Endgerät gemäß dem Oberbegriff des Patentanspruchs 1 sowie ein Verfahren gemäß dem Oberbegriff des Patentanspruchs 5.

Solche Endgeräte sind beispielsweise Mobilfunkgeräte, Autoradios oder PDAs (Personal Digital Assistant), die jeweils für den Empfang von Rundsendenachrichten ausgebildet sind.

In vielen Anwendungsbereichen und Situationen des täglichen Lebens ist es wünschenswert und notwendig, Teilnehmern bestimmter Nutzergruppen, spezifische Nachrichten zukommen zu lassen. Solche Nutzergruppen sind beispielsweise Verkehrsteilnehmer, Urlauber, Service Personal, etc. Solche Nachrichten sind nur für eine spezifische Teilnehmergruppe in einer spezifischen Umgebung von Wert, um beispielsweise vor Unfällen, Staus oder Unwettern zu warnen.

Vermieden werden sollte hierbei zum einen die Übermittlung örtlich / zeitlich unrelevanter Information, beispielsweise die Warnung vor einem Unwetter 500 km entfernt. Weiter sollte die übermäßige Nutzung vorhandener Übertragungsressourcen, beispielsweise der Aufbau einer dedizierten Punkt-zu-Punkt Verbindung zu jedem in Frage kommenden Adressaten, unterbleiben können.

Bekannte Verfahren sind zum Beispiel ADAC-Verkehrsmeldungen oder SMS-Dienste verschiedener Mobilfunknetz-Betreiber, insbesondere die Begrüßung bei einem Neueintritt in ein Netz. Weiterhin werden Radio-Rundsendeeinrichtungen benutzt, die über eine begrenzte Reichweite verfügen, beispielsweise kurzreichweitige UKW-Verbindungen, die den Empfängerkreis schlicht durch ihre Reichweitenbegrenzung einschränken.

Auch in Mobilfunksystemen gibt es Verfahren, bei denen Teilnehmergruppen abhängig von Regeln adressiert werden können.

In IP Transportnetzen basiert die Zustellung von Datenpaketen in weiten Teilen zumindest teilweise aus Broadcast-Paketen, mit denen, bei sorgfältiger Konfiguration der Teilnehmer IP-Adressen, eine gruppenweise Adressierung (Multicast) von Teilnehmergruppen möglich ist.

Alle genannten Verfahren sind problematisch, so dass eine sinnvolle Massennutzung erschwert beziehungsweise unrentabel gemacht wird.

Im Einzelnen führen simple Radioverkehrsmeldungen leicht zu einer Informationsüberflutung, weil zu viele und für den Einzelnen unrelevante Meldungen ausgegeben werden.

Das Versenden einer SMS erfordert einen hohen administrativen Aufwand und benutzt über Gebühr teure Funk- und Netzressourcen.

Eine Begrenzung des Adressatenraums durch Reichweiteneinschränkung ist aufwendig, auf Grund der grossen Anzahl von Radiozugangsstationen, und zudem unzuverlässig, auf Grund der Ungenauigkeit der Reichweitengrenze.

Das IP-Routing ermöglicht zwar eine teilnehmerindividuelle, jedoch keine ortsbezogene Zustellung von Informationen.

Der Erfindung liegt die Aufgabe zugrunde, eine für den Benutzer verbesserte Informationsversorgung anzugeben.

Diese Aufgabe wird erfindungsgemäß für ein Informations-Endgerät durch im Patentanspruch 1 und für ein Verfahren zur selektiven Informationsversorgung durch im Patentanspruch 5 angegebenen Merkmale gelöst.

Die Erfindung und insbesondere das erfindungsgemäße Informations-Endgerät gibt dem Teilnehmer beziehungsweise dem Empfänger von indizierten Rundsendenachrichten die Möglichkeiten, nach vielfältigen Kriterien seinen Informationsbedarf zu selektieren.

Die Vorteile für den Benutzer sind vielfältig:
a) mit vorhandenen Technologien kann in kürzester Zeit ein entsprechender Dienst zu Informationsversorgung des Endgerätes eingerichtet werden. So beispielsweise die Bereitstellung einer Plattform für Gewerbetreibende: per Internet könne Interessenten ihre Dienste (Pizza Service, freie Zimmer) unter einer Orts- und / oder Zeitangabeangabe "Broadcasten lassen"
b) die vorhandenen Übertragungskapazitäten - wenn sie denn nach oben beschriebenen Verfahren eingesetzt werden - reichen bei weitem
c) entsprechende Dienste dürften wohl in der Bevölkerung auf große Akzeptanz stoßen
d) es stünde ein Medium zur Verfügung, das alle möglichen ortsabhängigen Dienste erlaubt, von Verkehr über Unwetter bis zur Werbung
e) es können gebührenpflichtige Rundsendenachrichten zu kommerziellen Zwecken angeboten werden, die beispielsweise verschlüsselt werden oder nur über eine entsprechenden Indikator oder nur über entsprechende Empfangseinrichtungs-Ergänzungen zur Anzeige gebracht werden können.

Im Folgenden wird die Erfindung an Hand eines in der Zeichnung dargestellten Ausführungsbeispieles beschrieben. Dabei zeigen:
- Figur 1: ein Übersichtsbild zur Erläuterung der Wirkungsweise des erfindungsgemäßen Informations-Endgerätes beziehungsweise des erfindungsgemäßen Verfahrens, und
- Figur 2: eine Darstellung einer indizierten Meldung beziehungsweise Nachricht.

In zunehmenden Maße finden Übertragungsmedien Anwendung, die zwar über limitierte Kapazitäten für eine individuelle Übertragungen bieten (im uplink), dafür aber sehr großzügige Rundsende-Kapazitäten (im downlink) aufweisen. Beispiele hierfür sind Satelliten-Verbindungen, insbesondere digitale Satellitenverbindungen wie DVB-S (Digital Video Broadcast /Broadcasting - Satellit), terrestrische, digitale RundsendeEinrichtungen wie DVB-T und DAB-T (Digital Video beziehungsweise Audio Broadcast / Broadcasting - Terrestrial).

Auch neuere Generationen von zellularen Mobilfunknetzen verfügen über die Möglichkeit, den Downlink bezüglich seiner Bandbreite mächtiger auszugestalten als den Uplink, dies gilt insbesondere für Rundsendedienste. Solche Mobilfunknetze sind beispielsweise UMTS (Universal Mobile Telecommunications System), insbesondere HSDPA (High Speed Downlink Packet Access), WiMax (Worldwide Interoperability for Microwave Access) und zukünftige, einer vierten Generation zuzurechnenden Übertragungstechnologien.

Mit der Verbreitung oben genannter Technologien steigt die Verfügbarkeit integrierter Systeme in Teilnehmerendgeräten und Fahrzeugen, wie beispielsweise Notebook, Autoradio, PDA, etc.

Desweiteren findet die Verwendung von Ortbestimmungsgeräten, in der Regel basierend auf GPS (Global Positioning Satellite/System) und in Zukunft wohl auch auf dem europäischen System Galileo, zunehmend Verbreitung, vornehmlich in beziehungsweise mit den gleichen Endgeräten.

Sind nun solche Endgeräte beziehungsweise Informations-Endgeräte mit beiden Funktionen ausgestattet, also Einrichtungen zum Empfang von Rundsendeeinrichtungen und Einrichtungen zur Ortsbestimmung, beispielsweise ein Autoradio mit Navigationssystem und DVB-T/S/UMTS Karte, so können Rundsendenachrichten insbesondere bezüglich ihrer Ortsrelevanz "gefiltert" und nur die gewünschten Meldungen zur Anzeige gebracht werden. Das bedeutet, dass beispielsweise ein DVB-S Kanal eine Vielzahl von Rundsende-Nachrichten enthalten kann, von denen nur ein Promille für einen der Teilnehmer in Frage kommen.

DVB-S beziehungsweise DVB-T Übertragungen ermöglichen, je nach Ausgestaltung, die Übermittlung von bis zu mehreren tausend Videokanälen, von denen derzeit die meisten unbenutzt sind. Ein typischer Video-Kanal hat die typische Bandbreite einer S-VCD (Super-Video-Compact Disk, i.d.R. 2.3 -2.9 Mbit/s). Die Nutzung eines einzigen solchen Kanals erlaubt es beispielsweise pro Stunde rund 5000 Audiomeldungen von je 20 sec Länge in Dolby-Digital Stereo zu übermitteln oder wahlweise 50000 in GSM Sprachqualität. Alternativ können pro Stunde rund 1.5 Millionen Textmeldungen (unkomprimiert) von je 100 Zeichen (z.B. Laufschrift auf einer Radio Anzeige) übermittelt werden.

Teilnehmergruppen-relevante Rundsendemeldungen können mit Indikatoren versehen werden, die es den Teilnehmern erlauben, Filterfunktionen direkt oder über die Wahl einer entsprechenden Applikation zu setzen. Solche Indikatoren können beispielsweise sein:
- die Art der Meldung (Audio,Video, Text)
- ein Gruppenindex (Zugehörigkeit zu einer bestimmten Nutzergruppe)
- die Art des Dienstes (Nachricht, Warnung, Hinweis, Werbung)
- die Priorität der Nachricht (dringend, wichtig, interessant)
- die örtliche Relevanz (beispielsweise Radius um eine geographische Adresse)
- die zeitliche Relevanz (gültig von bis)
- ETP (Escape to Proprietary): eine applikationsspezifische Rundsendemeldung kann weitere Parameter enthalten, die nur von der entsprechenden Applikation ausgewertet werden.
- frei konfigurierbar, z.B. beim Erwerb der Nutzungsrechte einer Applikation wird eine entsprechende Filterkennung mitgeteilt, und
- Attribute (beispielsweise Farbe, Schriftart, etc.)

Die Erfindung geht aus von über eine Luftschnittstelle empfangenen, indizierten Rundsende-Meldungen beziehungsweise Rundsende-Nachrichten, das heisst von mit Indikatoren versehenen Nachrichten.

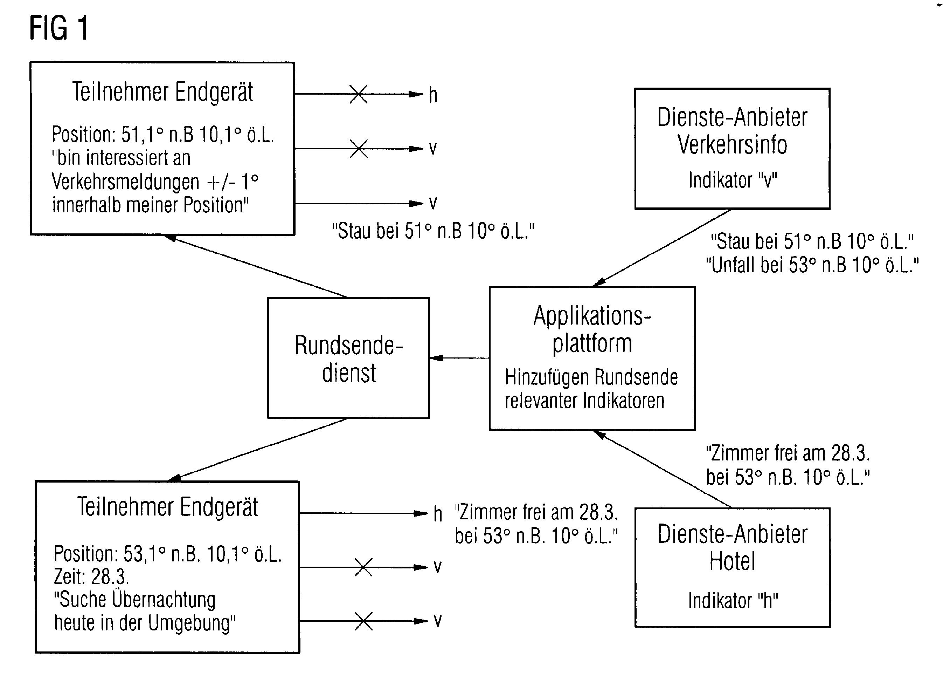

Hierzu ist in Figur 1 ein Rundsendedienst zur Ausstrahlung von Nachrichten dargestellt. Eine Applikationsplattform als Rundsende-Nachrichten-Verwaltungs-Plattform verfügt über die Möglichkeit, Rundsende-Nachrichten unterschiedlicher Diensteanbieter zu verwalten, mit Indikatoren zu versehen und an den Rundsendedienst zu geben. Als unterschiedliche Dienste-Anbieter sind ein Verkehrsinfo-Anbieter (Indikator "v") und ein Hotel (Indikator "h") dargestellt.

Als Rundsendenachrichten werden in der Darstellung von den Endgeräten zwei Verkehrsinfos, abgekürzt "Stau" und "Unfall", sowie eine Hotelinformation "Zimmer" empfangen.

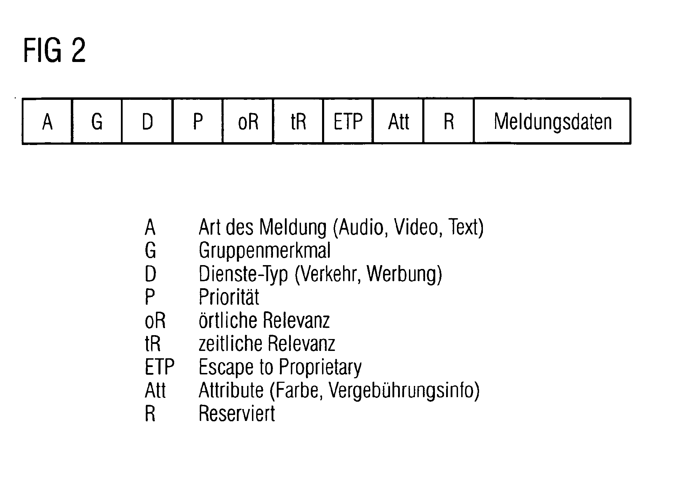

Im erfindungsgemäßen Teilnehmerendgerät beziehungsweise Informations-Endgerät können endgeräteseitig die indizierten Rundsende-Nachrichten empfangen und mittels gesetzter Filter beispielsweise zur Anzeige gebracht, gespeichert, angekündigt oder unterdrückt werden. Solche Indikatoren sind beispielsweise Typ und Attribute (siehe Figur 2). Diese Indikatoren können auch als Behandlungs-Indikatoren bezeichnet werden, da sie eine unterschiedliche Behandlung im Endgerät ermöglichen.

Bei einer Weiterbildung der Erfindung wird beispielsweise die Funktion der Orts- und / oder Zeitbestimmung des Endgerätes benutzt sowie die Möglichkeit, Rundsende-Nachrichten mit entsprechenden Indikatoren über Orts- und / oder Zeitrelevanzen zu versehen. Diese Indikatoren können als Auswahl-Indikatoren bezeichnet werden, da sie eine Selektierung gemäß dem Informationsbedarf des Benutzers ermöglichen.

Bei einer weiteren Ausgestaltung bietet die Erfindung die Möglichkeit Applikationen, bezüglich der teilnehmerindividuellen Einstellungen für die Verfahrensweise mit empfangenen Nachrichten umzugehen, zu Laden, zu Installieren, in Betrieb zu setzen und zu entfernen.

Die beiden Endgeräte werden von den Teilnehmern in unterschiedlichen geographischen Lagen betrieben, abgekürzt in "51,1°" und in "53°".

Beide Teilnehmer haben unterschiedlich Bedürfnisse zur Informationsversorgung. Einer möchte gerne ihn betreffende Staumeldungen empfangen, allerdings nur in einem geographisch sinnvollem Rahmen (+/- 1° Abweichung). Ein anderer sucht eine Übernachtungsmöglichkeit zu einem festen Zeitpunkt in der näheren Umgebung. Desweiteren gibt es Diensteanbieter, hier repräsentiert durch Verkehrsinfo und Hotel, die jeweilige Informationen rundsenden möchten. Hierzu bedienen sie sich des Applikations-Plattformanbieters, der einen Zugang zu Rundsendestationen ermöglicht, indem er die jeweiligen Rundsendenachrichten um die passenden Indikatoren ergänzt. So werden beispielsweise die Verkehrsnachrichten mit einem Indikator "v" versehen, freie Hotelbetten über ein "h" kennbar gemacht. Desweiteren werden die Rundsendenachrichten mit weiteren Kenngrößen, wie beispielsweise Zeit und Ortsangabe, versehen und anschließend all alle Teilnehmer rundgesendet.

Ein Teilnehmer, der ausschließlich für ihn relevante Informationen empfangen möchte, würde seine Teilnehmerendeinrichtung entsprechend konfigurieren, so dass von den Verkehrsmeldungen nur die örtlich / zeitlich relevanten zur Anzeige gebracht werden. Der "Unfall" außerhalb des geographisch interessanten Bereiches sowie die Verfügbarkeitsmeldung freier Hotelbetten würden vom Endgerät beziehungsweise der darauf laufenden Applikation ausgeblendet werden, so dass nur die für ihn relevante Meldung "Stau" angezeigt wird.

Dem Teilnehmer mit dem Übernachtungswunsch würde entsprechend nur die Hotelmeldung "h" angezeigt werden.

Die Diensteanbieter senden dem Plattformbetreiber ihre Informationen, versehen mit notwenigen Attributen wie Zeit, Ort, etc. vorzugsweise über in der IT-Welt üblichen Schnittstellen, z.B. unter Benutzung von HTML oder XML. Der Plattformbetreiber kann diese ggf. um weitere Informationen ergänzen, wie viele freie Betten insgesamt gemeldet sind, etc.

Die Figur 2 zeigt einen möglichen Übertragungsrahmen, wie er beispielsweise über Funk rundgesendet werden kann.

Einem Block, bestehend aus Indikatoren / Attributen, die zur Auswertung der weiteren Vorgehensweise bezüglich dieser Information vom Teilnehmerendgerät beziehungsweise einer darauf laufenden Applikation ausgewertet werden, folgt die eigentliche Nachricht.

Die Indikatoren sind insbesondere zeit- und / oder ortsrelevante Angaben und die Attribute beispielsweise Angaben über die Art der Nachricht.

## Patentansprüche

1. Informations-Endgerät für den Empfang und die Ausgabe von Rundsendenachrichten, wobei diese Rundsendenachrichten mit Indikatoren versehen sind,
**gekennzeichnet durch**
einstellbare Filter für die Indikatoren zur Selektion der indizierten Nachrichten, wobei die Selektion hinsichtlich der Behandlung und / oder der Auswahl der Nachrichten erfolgt.

2. Informations-Endgerät nach Anspruch 1,
**gekennzeichnet durch**
Indikatoren (Auswahl) für eine Orts- und / oder eine Zeitrelevanz der Nachrichten.

3. Informations-Endgerät nach Anspruch 1 oder 2,
**gekennzeichnet durch**
Indikatoren (Behandlung) für eine Ankündigung und / oder Anzeige und / oder Speicherung der Nachrichten.

4. Informations-Endgerät nach einem der vorhergehenden Ansprüche,
**gekennzeichnet durch**
Indikatoren (Auswahl) für eine Klassifizierung der Nachrichten.

5. Verfahren zur selektiven Informationsversorgung, bei dem mit Indikatoren versehene Nachrichten rundgesendet werden,
**dadurch gekennzeichnet dass**
empfangene Nachrichten über einstellbare Filter für die Indikatoren selektiert werden, wobei die Selektion hinsichtlich der Behandlung und / oder der Auswahl der Nachrichten erfolgt.
